Europäisches Patentamt

European Patent Office

Office européen des brevets

(11) Publication number: **0 246 658**
**A2**

(12) **EUROPEAN PATENT APPLICATION**

(21) Application number: **87107488.6**

(51) Int. Cl.⁴: **H04B 1/50**

(22) Date of filing: **22.05.87**

(30) Priority: **23.05.86 JP 118908/86**

(43) Date of publication of application:
**25.11.87 Bulletin 87/48**

(84) Designated Contracting States:
**DE FR GB IT**

(71) Applicant: **NEC CORPORATION**
**33-1, Shiba 5-chome, Minato-ku**
**Tokyo 108(JP)**

(72) Inventor: **Yamamoto, Osamu c/o NEC**
**Corporation**
**33-1, Shiba 5-chome**
**Minato-ku Tokyo(JP)**

(74) Representative: **Vossius & Partner**
**Siebertstrasse 4 P.O. Box 86 07 67**
**D-8000 München 86(DE)**

(54) **Transmitter/Receiver apparatus.**

(57) The transmitter/receiver apparatus as described comprises a local oscillator (2) for generating a local oscillation frequency at a predetermined position between a transmit and a receive frequency band; a transmit frequency converter (6) for converting a transmit intermediate frequency band into the transmit frequency band based on the local oscillation frequency such that a transmit image frequency band of the transmit frequency band does not overlap the receive frequency band; and a receive frequency converter (5) for converting, based on the local oscillation frequency, the receive frequency band into a receive intermediate frequency band. This receive intermediate frequency band does not overlap the transmit intermediate frequency band, such that a receive image frequency band of the receiver intermediate frequency band does not overlap the transmit frequency band. This provides for a miniature and inexpensive transmitter/receiver apparatus which is satisfactorily applicable to microwave band communications even if the isolation between discrete circuits is insufficient.

FIG. 1

## TRANSMITTER/RECEIVER APPARATUS

Background of the Invention

The present invention relates to a transmitter/receiver apparatus having application to microwave band communications such as satellite communication and, more particularly, to a transmitter/receiver apparatus which is miniature enough to be installed in, for example, the feeder section of an antenna.

While the tendency to apply satellite communication channels to commercial communications is increasing, a prerequisite for facilitating such an application is cutting down the cost and size of a transmitter/receiver apparatus. For example, a miniature transmitter/receiver apparatus which can be incorporated in the feeder section of an about 2 meters antenna is desired.

In a transmitter/receiver apparatus applicable to commercial communications which uses a microwave band, e.g., satellite communication, while the transmit level is on the order of I watt, the receive level is more than I00 dB lower than the transmit level. Hence, what is very important with this type of transmitter/receiver apparatus is setting up sufficiently isolation between discrete circuits in order to minimize interference from a transmit system to a receive system. However, in the case that miniaturization is intended presupposing the overall dimensions of the apparatus housing, the freedom of circuit layout is so limited that the sufficient isolation between independent circuits is impracticable.

Summary of the Invention

It is therefore an object of the present invention to provide a miniature and inexpensive transmitter/receiver apparatus which is satisfactorily applicable to microwave band communications even if the isolation between discrete circuits is insufficient.

In order to achieve the above object, a transmitter/receiver apparatus of the present invention comprises a local oscillator for generating a local oscillation frequency at a predetermined position between a transmit and a receive frequency band; a transmit frequency converter for converting a transmit intermediate frequency band into the transmit frequency band based on the local oscillation frequency such that a transmit image frequency band of the transmit frequency band does not overlap the receive frequency band; and a receive frequency converter for converting, based on the local oscillation frequency, the receive frequency band into a receive intermediate frequency band, which does not overlap the transmit intermediate frequency band, such that a receive image frequency band of the receiver intermediate frequency band does not overlap the transmit frequency band.

The transmitter/receiver apparatus further comprises a frequency multiplexer which connects to the transmit and receive frequency converters a single cable over which a signal of the transmit intermediate frequency band and a signal of the receive intermediate frequency band are propagated in a frequency-multiplexed condition.

The local oscillator generates a local oscillation frequency at a position between a transmit frequency band and a receive frequency band and which is commonly applied to transmission and receipt, the local oscillation frequency being fed to the transmit and receive frequency converters.

The transmit frequency converter converts a transmit intermediate frequency band into the transmit frequency band based on the local oscillation frequency and such that its transmit image frequency band does not overlap the receive frequency band.

Further, the receive frequency converter converts, based on the local oscillation frequency, the receive frequency band into a receive intermediate frequency band, which does not overlap the transmit intermediate frequency band, such that its receive image frequency band does not overlap the transmit frequency band.

As a result, the receive intermediate frequency band, the transmit intermediate frequency band, the transmit image frequency band, the receive frequency band, the local oscillation frequency, the receive image frequency band, and the transmit frequency band are distributed on a frequency axis without overlapping each other.

The frequency multiplexer connects a single signal cable to the transmit and receive frequency converters, multiplexes an incoming signal of the transmit intermediate frequency band and an outgoing signal of the receive intermediate frequency band, and allows intermediate frequency signals to be interchanged over the single signal cable.

Thus, in the transmitter/receiver apparatus of the present invention, the receive intermediate frequency band, the transmit intermediate frequency band, the transmit image frequency band, the receive frequency band, the local oscillation frequency, the receive image frequency band, and the transmit frequency band are so determined as not to overlap each other. Hence, interference due to migration from the transmit system to the receive system and others is eliminated even if the isolation between independent circuits is insufficient, whereby the transmitter/receiver apparatus is rendered simple and miniature. The transmit and receive systems share a single local oscillator to cut down the cost of the apparatus, compared to a prior art apparatus in which they are provided with an exclusive local oscillator each. Further, since a single signal cable suffices for the interchange of intermediate frequency signals, the cable and construction expenses are noticeably reduced. Hence, there can be implemented easily and economically an arrangement wherein, for example, the apparatus of the present invention is mounted in an outside antenna feeder section and connected to an indoor main equipment by a single signal cable.

Brief Description of the Drawings

Fig. 1 is a block diagram of a transmitter/receiver apparatus embodying the present invention;

Fig. 2 is a view of a frequency distribution; and

Fig. 3 is a side elevation showing the apparatus of Fig. 1 which is installed in the feeder section of an antenna by way of example.

Detailed Description of Preferred Embodiment

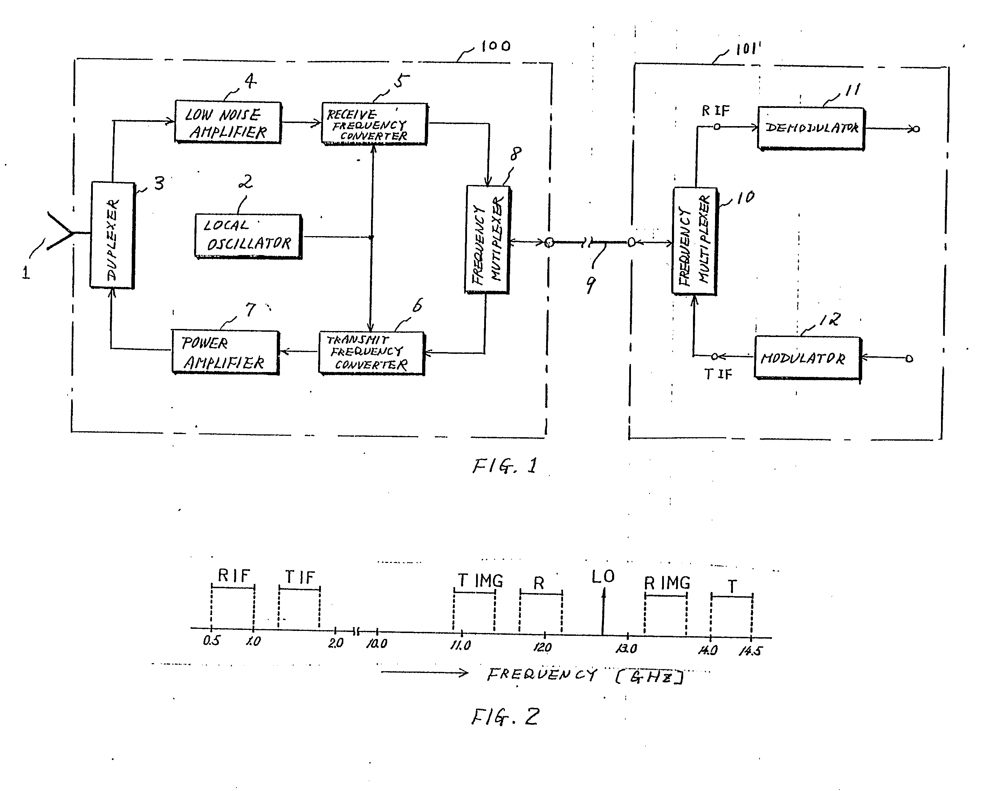

Referring to Fig. 1 of the drawings, a transmitter/receiver apparatus in accordance with the present invention is shown and generally designated by the reference numeral 100. The apparatus 100 has a miniature box-like configuration and may be mounted in, for example, the feeder section of an outdoor antenna 1. Basically, the apparatus 100 comprises a local oscillator 2, a duplexer 3, a low noise amplifier 4, a receive frequency converter 5, a transmit frequency converter 6, a power amplifier 7, and a frequency multiplexer 8. The frequency multiplexer 8 is connected by a single signal cable, e.g., a coaxial cable 9 to a frequency multiplexer 10 of indoor main equipment 101. Connected to the frequency multiplexer 10 are a demodulator 11 and a modulator 12.

The local oscillator 2 oscillates a local oscillation frequency LO at a predetermined position between a transmit frequency band T and a receive frequency band R. The local oscillation frequency LO is fed to the transmit and receive frequency converters 6 and 5. Specially, assuming that the transmit frequency T lies in a range of 14.0 to 14.5 GHz and the receive frequency R in a range of 11.7 to 12.2 GHz by way of example, the local oscillation frequency LO is preselected to be 12.7 GHz.

A signal modulated by the modulator 12 and whose frequency lies in a transmit intermediate frequency band TIF is fed to the transmit frequency converter 6 via the frequency multiplexer 10 of the indoor equipment 101, the signal cable 9, and the frequency multiplexer 8. The transmit frequency converter 6 converts the input signal having the frequency T into a signal which belongs to the transmit frequency band T, based on the local oscillation frequency LO such that its transmit image frequency TIMG does not overlap the receive frequency band R. The signal with the frequency T is amplified by the power amplifier 7 and, then, radiated from the antenna 1 toward a satellite. In this particular embodiment, the transmit intermediate frequency band TIF ranges from 1.3 to 1.8 GHz while the transmit image frequency band TIMG ranges from 10.9 to 11.4 GHz.

A signal coming in through the antenna 1 and lying in the receive frequency band R is routed through the duplexer 3 and low noise amplifier 4 to the receive frequency converter 5. This converter 5 converts, based on the local oscillation frequency LO, the signal of the receive frequency band R into a signal whose frequency lies in a receive intermediate frequency band RIF, which does not overlap the transmit intermediate frequency band TIF, such that its receive image frequency band RIMG does not overlap the transmit frequency band T. The output of the receive frequency converter 5 is delivered to the indoor equipment 101 via the frequency multiplexer 8, signal cable 9, and frequency multiplexer 10. In this particular embodiment, the receive intermediate frequency band RIF ranges from 0.5 to 1.0 GHz, and the receive image frequency band RIMG ranges from 13.2 to 13.7 GHz.

Fig. 2 shows the consequent distribution of frequencies which are generated in the transmit and receive systems of the transmitter/receiver apparatus 100. As shown, the receive intermediate frequency band RIF (0.5 to 1.0 GHz),the transmit intermediate frequency band TIF (1.3 to 1.8 GHz), the transmit image frequency band TIMG (10.9 to 11.4 GHz), the receive frequency band R (11.7 to 12.2 GHz), the local oscillation frequency LO (12.7 GHz), the receive image frequency band RIMG (13.2 to 13.7 GHz) and the transmit frequency band T (14.0 to 14.5 GHz) are sequentially arranged on the frequency axis without overlapping each other.

In short, the present invention implements a transmit and a receive system with a common local oscillation source and, thereby, cuts down the cost, compared to a case wherein two independent local oscillation sources are used. Since different intermediate frequency bands are adopted for transmission and receipt, interference from the transmit system to the receive system is eliminated even if the isolation between discrete circuits is incomplete, as would occur if a transmit/receive apparatus were installed in a small housing. Furthermore, that the transmit image frequency band does not overlap the receive frequency band and the transmit image frequency band also protects the apparatus against interference. Consequently, a simple, miniature and inexpensive transmitter/receiver apparatus is achieved.

Since the transmit and receive intermediate frequencies are different from each other as stated above, intermediate frequency signals can be interchanged between the outdoor apparatus 100 and the indoor main equipment 101 over the single cable 9 by multiplexing signals which belong to those different frequency bands. Each of the frequency multiplexers 8 and 10 has a frequency multiplexing function and a signal interchanging function. Such allows the single cable 9 to suffice when the apparatus 100 is to be placed outside of a building and connected to the indoor equipment 101.

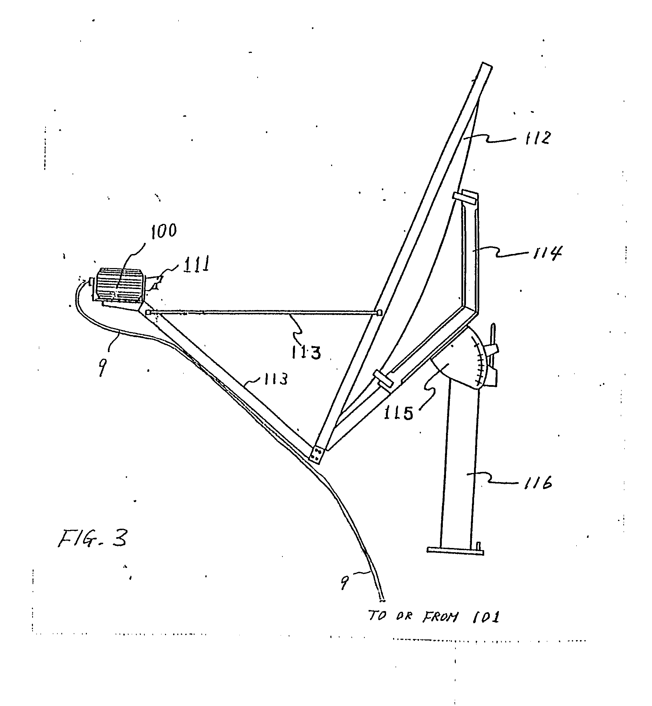

As shown in Fig. 3, the transmitter/receiver apparatus 100 is miniature enough to be installed even in, for example, the feeder section of an antenna and, therefore, easy to mount. Such remarkably cuts down the total cost of an antenna and others to which the apparatus 100 is applicable.

In Fig. 3, there are shown the cable, e.g., a coaxial cable 9 adapted to interconnect the outdoor transmitter/receiver apparatus 100 and the indoor equipment 101, a primary radiator, or horn, 111 mounted on the apparatus 100, a parabolic reflector 112 of the antenna, support members 113 for supporting the apparatus 100, a framework 114 for supporting the whole antenna with the appratus 100, a mechanism 115 for adjusting the elevation of the antenna, and an antenna support post. Basically, the illustrative configuration constitutes an offset parabolic antenna. To align the antenna pointing to a direction of wave arrival, the azimuth is adjusted by the post 116 and the elevation by the elevation adjusting mechanism 115.

For an arrangement relating to the present invention, a reference may be made to U.S. Patent Application (Serial No. 831,667) which is assigned to the applicant of the present invention.

As described above, in a transmitter/receiver apparatus of the present invention, a receive intermediate frequency band, a transmit intermediate frequency band, a transmit image frequency band, a receive frequency band, a local oscillation frequency, a receive image frequency band, and a transmit frequency band are so determined as not to overlap each other. Hence, interference from a transmit system to a receive system and others is eliminated even if the isolation between independent circuits is insufficient, whereby the transmitter/receiver apparatus is rendered simple and miniature. The transmit and receive systems share a single local oscillator to cut down the cost of the apparatus, compared to a prior art apparatus in which they are provided with an exclusive local oscillator each. Further, since a single signal cable suffices for the interchange of intermediate frequency signals, the cable and construction expenses are noticably reduced. Hence, there can be implemented easily and economically an arrangement wherein, for example, the apparatus of the present invention is mounted in an outside antenna feeder section and connected to an indoor main equipment by a single signal cable.

## Claims

1. A transmitter/receiver apparatus comprising:
a local oscillator for generating a local oscillation frequency at a predetermined position between a transmit and a receive frequency band;
a transmit frequency converter for converting a transmit intermediate frequency band into said transmit frequency band based on said local oscillation frequency such that a transmit image frequency band of said transmit frequency band does not overlap said receive frequency band; and
a receive frequency converter for converting, based on the local oscillation frequency, the receive frequency band into a receive intermediate frequency band, which does not overlap the transmit intermediate frequency band, such that a receive image frequency band of said receive intermediate frequency band does not overlap the transmit frequency band.

2. A transmitter/receiver apparatus as claimed in claim 1, further comprising a first frequency multiplexer which connects to the transmit and receive frequency converters one end of a single signal cable over which a signal of the transmit intermediate frequency band and a signal of the receive intermediate frequency band are propagated in a frequency-multiplexed condition.

3. A transmitter/receiver apparatus as claimed in claim 2, further comprising a second frequency multiplexer which is connected to the other end of the signal cable.

4. A transmitter/receiver apparatus as claimed in claim 2 or 3, wherein the signal cable comprises a coaxial cable.

5. A transmitter/receiver apparatus comprising a first and a second device which are interconnected by a single signal cable;
said first device comprising:
a local oscillator for generating a local oscillation frequency at a predetermined position between a transmit and a receive frequency band;

a transmit frequency converter for converting a transmit intermediate frequency band into said transmit frequency band based on said local oscillation frequency such that a transmit image frequency band of said transmit frequency band does not overlap said receive frequency band;

a receive frequency converter for converting, based on the local oscillation frequency, the receive frequency band into a receive intermediate frequency band, which does not overlap the transmit intermediate frequency band, such that a receive image frequency band of said receive intermediate frequency band does not overlap the transmit frequency band; and

a first frequency multiplexer connected between one end of the signal cable and said transmit and receive frequency converters for multiplexing in frequency a signal of the transmit intermediate frequency band and a signal of the receive intermediate frequency band; and

said second device comprising:

a second frequency multiplexer connected to the other end of said signal cable; and

a demodulator and a modulator each being connected to a respective one of other two terminals of said second frequency multiplexer.

6. A transmitter/receiver apparatus as claimed in claim 5, wherein the first device is located outside of a building and the second device inside of said building.

7. A transmitter/receiver apparatus as claimed in claim 5 or 6, wherein the first device is mounted in a feeder section of an antenna.

8. A transmitter/receiver apparatus as claimed in any of claims 5 to 7, wherein the signal cable comprises a coaxial cable.

FIG. 1

FIG. 2

0 246 658

FIG. 3

TO OR FROM 101